# EUROPEAN PATENT SPECIFICATION

(11) **EP 3 192 699 B1**
(45) Date of publication and mention of the grant of the patent: **09.05.2018**
(21) Application number: 17150095.2
(22) Date of filing: 03.01.2017
(51) Int. Cl.: B60Q 1/42

(54) **INPUT OPERATION DEVICE**
EINGABEVORRICHTUNG
DISPOSITIF DE COMMANDE

(30) Priority: 14.01.2016 JP 2016005451
(43) Date of publication of application: 19.07.2017
(73) Proprietor: Alps Electric Co., Ltd., Tokyo 145-8501 (JP)
(72) Inventor: KOSAKA, Ken, Tokyo 145-8501 (JP)
(74) Representative: Schmitt-Nilson Schraud Waibel Wohlfrom Patentanwälte Partnerschaft mbB

(56) References cited:
- EP-A1- 2 756 991
- DE-A1-102011 122 445
- FR-A2- 2 312 392
- FR-A5- 2 246 171

## Description

### BACKGROUND OF THE INVENTION

### 1. Field of the Invention

The present invention relates to an input operation device which is provided with an operating lever at least rotatable from a neutral position, and to an input operation device having a function in which, for example, when a steering is rotated in one direction and then rotated in the opposite direction, an operating lever is automatically returned from a left turn instruction rotational position or a right turn instruction rotational position to a neutral position.

### 2. Description of the Related Art

A turn signal switch device that is one of input operation devices is provided at the driver's seat of an automobile, and an operating lever thereof is rotatably provided in a housing mounted on a steering column. A switch which is driven according to the rotation of the operating lever is provided in the housing so as to be able to flash a left turn or right turn indicator lamp by rotating the operating lever from a neutral position to a left turn instruction rotational position or a right turn instruction rotational position.

A cam face is provided in the housing in order to guide a rotation direction of the operating lever, and a driver which is driven according to the rotation of the operating lever slides on the cam face. Further, the operating lever is latched at a left turn instruction rotational position or a right turn instruction rotational position. However, the turn signal switch device is provided with a cancel mechanism of automatically returning the operating lever from the left turn instruction rotational position or the right turn instruction rotational position to the neutral position by rotating a steering wheel in the opposite direction after the steering wheel is rotated in an instruction direction. As the turn signal switch device provided with such a cancel mechanism, there is a turn signal switch device as disclosed in Japanese Unexamined Patent Application Publication No. 2012-195103, for example.

In the turn signal switch device of the related art described above, a cancel lever is guided so as to be able to perform a forward and backward movement and a rotational movement on a plane. However, the cancel lever vibrates at the time of waiting or the time of an operation, and the cancel lever and a guide repeat contact and non-contact, and thus there is a problem in which abnormal noise is generated. An input operation according to the preamble of claim 1 is known from EP 2 756 991.

### SUMMARY OF THE INVENTION

The present invention provides an input operation device which does not generate abnormal noise at the time of waiting or the time of an operation of a cancel lever with a simple mechanism.

In order to solve the problem of the related art described above, according to an aspect of the present invention, there is provided an input operation device including: an operating lever; a holder which supports a base portion of the operating lever so as to be rotatable on one plane ; a housing which supports the holder so as to be rotatable on the other plane intersecting the one plane; and a cancel lever which is provided in the housing so as to be movable according to the rotation of the holder and can perform an advance and retreat movement with respect to a rotation locus of a cancel projection which rotates along with a steering shaft, and a rotation, in which a leaf spring portion is integrally molded in the cancel lever, and the leaf spring portion is elastically biased so as to be pressed against a guide surface which guides the advance and retreat movement and the rotation of the cancel lever.

According to this configuration, it is possible to always bring the cancel lever into contact with the guide surface at the time of the advance and retreat movement and the time of the rotation of the cancel lever, and thus a gap does not occur between the cancel lever and the guide surface, and abnormal noise which occurs due to the cancel lever vibrating (behaving violently) can be prevented.

Further, according to this configuration, the above-described function is provided to the cancel lever and the guide surface, whereby it is possible to obtain the effect of suppressing the abnormal noise, addition of a new component is not required, and thus the above effect can be realized with a simple configuration.

Preferably, in the input operation device according to the present invention, the guide surface has a cam face which guides the leaf spring portion to a predetermined position.

According to this configuration, the leaf spring portion is held at a predetermined position by the cam face, and therefore, it is possible to maintain the cancel lever in a stable standby state, and generation of abnormal noise due to vibration or the like can be prevented.

Preferably, in the input operation device according to the present invention, the leaf spring portion has a protrusion portion facing the guide surface, and a recessed portion which is configured of the cam face with which the protrusion portion comes into contact by elastic biasing so as to be pressed in the entire movement range of the cancel lever is formed in the guide surface.

According to this configuration, a function of bringing the protrusion portion of the leaf spring portion into contact with the cam face by elastic biasing so as to be pressed can be realized with a simple configuration. Further, according to this configuration, vibration of the cancel lever can be suppressed in the entire movement range of the cancel lever.

Preferably, in the input operation device according to the present invention, the recessed portion has a cam face which is provided to extend in a direction of the advance and retreat movement of the cancel lever and inclined in a direction suppressing a rotational movement of the protrusion portion at the time of the rotation of the cancel lever.

According to this configuration, the vibration in the rotation direction of the cancel lever can be suppressed without interfering with the advance and retreat movement of the cancel lever.

Preferably, in the input operation device according to the present invention, the leaf spring portion has a curved portion which is curved in a plane direction along the guide surface.

According to this configuration, a spring constant can be reduced, compared to a case where the leaf spring portion is made in a linear shape.

Preferably, in the input operation device according to the present invention, the operating lever is rotatable from a neutral position to at least a left turn instruction rotational position and a right turn instruction rotational position, and the cancel lever has a protrusion portion which protrudes toward the rotation locus and advances to and retreats from the rotation locus, and two arm portions which protrude in a direction opposite to a protruding direction of the protrusion portion and rotate at the time of a retreat movement from the rotation locus of the cancel projection, thereby coming into contact with the holder and rotating the holder so as to automatically return the operating lever from the left turn instruction rotational position or the right turn instruction rotational position to the neutral position.

According to this configuration, at the time of the retreat movement of the cancel lever (at the time of a cancel operation, the two arm portions come into contact with the holder, thereby rotating the holding portion, whereby it is possible to return the operating lever to the neutral position.

Preferably, in the input operation device according to the present invention, the leaf spring portion is formed at each of the two arm portions.

According to this configuration, vibration of the cancel lever can be stably suppressed by two leaf spring portions.

Preferably, in the input operation device according to the present invention, the leaf spring portion is formed at each of the two arm portions, and the protrusion portion is formed on the tip side of the leaf spring portion.

According to this configuration, the protrusion portion which comes into contact with the guide surface is provided on the tip side of the arm portion, whereby the leaf spring portion can be easily bent.

Preferably, in the input operation device according to the present invention, each of the arm portions has an arm portion main body formed so as to surround the leaf spring portion, and the leaf spring portion provided so as to be movable in a direction bringing the protrusion portion close to the guide surface by being bent with the base side of the arm portion as a supporting point, inside of the arm portion main body.

According to this configuration, at the time of the rotation of the cancel lever, the contact of the leaf spring portion with other components can be avoided, and thus breakage of the leaf spring portion can be prevented.

Preferably, in the input operation device according to the present invention, a cam member is provided in the housing so as to face the base portion of the operating lever, a first driver is mounted on the base portion of the operating lever with a first elastic member interposed therebetween, so as to be brought into elastic contact with the cam member, the cam member has a central portion which locks the first driver when the operating lever is located at the neutral position, a projection for latching which locks the first driver when the operating lever is located at either position of at least the left turn instruction position and the right turn instruction position, and an inclined surface formed so as to elastically bias the first driver toward the central portion at a position except for a position where the central portion and the projection for latching are formed, the cancel lever is provided in the housing with an elastic member for cancel, which is in a compressed state, interposed therebetween, and is provided with an engagement projection in which a surface having a first apex portion on the rotation locus side is formed, the holder is provided with an engagement portion in which a surface having a second apex portion which comes into contact with the engagement projection when the operating lever is located at the neutral position is formed, and when the operating lever is located at the neutral position, the engagement projection and the engagement portion come into contact with each other at the first apex portion and the second apex portion and the cancel lever is withdrawn out of the rotation locus.

According to this configuration, a configuration in which the cancel lever is provided in the housing with the elastic member for cancel, which is in a compressed state, interposed therebetween, such that the cancel lever can perform the advance and retreat movement with respect to the rotation locus of the cancel projection and the rotation is made, and therefore, each of the elastic member for cancel and the cancel lever can be configured with a single member. Therefore, a cancel mechanism can be configured with a simple structure in which the number of components is less. Further, each member can be disposed in a small space, and therefore, it is possible to attain a reduction in the size of the input operation device. Further, the first driver is mounted on the base portion of the operating lever with the first elastic member interposed therebetween, such that the first driver is brought into elastic contact with the cam member, and therefore, the elastic member corresponding to the operating lever and the elastic member corresponding to the cancel mechanism can be separately configured. Therefore, the degree of freedom of design can be improved and it is possible to realize an input operation device having an excellent feeling.

According to the present invention, it is possible to provide an input operation device which does not generate abnormal noise at the time of waiting or the time of an operation of a cancel lever with a simple mechanism.

### BRIEF DESCRIPTION OF THE DRAWINGS

Fig. 1 is an exploded perspective view of a turn signal switch device in an embodiment;
Fig. 2 is an internal appearance perspective view for describing the positional relationship between a cancel lever and a lower case (a housing);
Fig. 3 is a cross-sectional view of the turn signal switch device shown in Fig. 1;
Figs. 4A and 4B are plan views describing an operation in which an operating lever is rotationally operated from a neutral position to a right turn instruction position;
Fig. 5 is a diagram showing a state where the cancel lever shown in Fig. 2 is removed;
Fig. 6 is a diagram for describing a cam face formed in a guide surface of the lower case;
Fig. 7 is an external view of the guide surface side of the cancel lever;
Fig. 8 is a perspective view of the cancel lever as viewed from the protrusion portion side;
Fig. 9 is a perspective view of the cancel lever as viewed from the side of first and second protrusion portions;
Fig. 10 is a cross-sectional configuration diagram of the cancel lever at the positions of the first and second protrusion portions, and first and second recessed portions;
Fig. 11 is an enlarged view of a portion of Fig. 4A;
Figs. 12A and 12B are plan views describing an operation of the operating lever on its way to be automatically returned from the right turn instruction position to the neutral position;
Figs. 13A and 13B are plan views describing an operation in which the operating lever shown in Fig. 12B is automatically returned to the neutral position;
Figs. 14A and 14B are plan views describing an operation in which the operating lever locked at the right turn instruction position is automatically returned to the neutral position;
Figs. 15A and 15B are plan views describing an operation in which the operating lever is automatically returned from a left turn instruction position to the neutral position; and
Figs. 16A and 16B are plan views describing an operation in which the operating lever locked at the left turn instruction position is automatically returned to the neutral position.

### DESCRIPTION OF THE PREFERRED EMBODIMENTS

Hereinafter, an embodiment of the present invention will be described.

In this embodiment, a case of applying an input operation device according to the present invention to a turn signal switch device is illustrated.

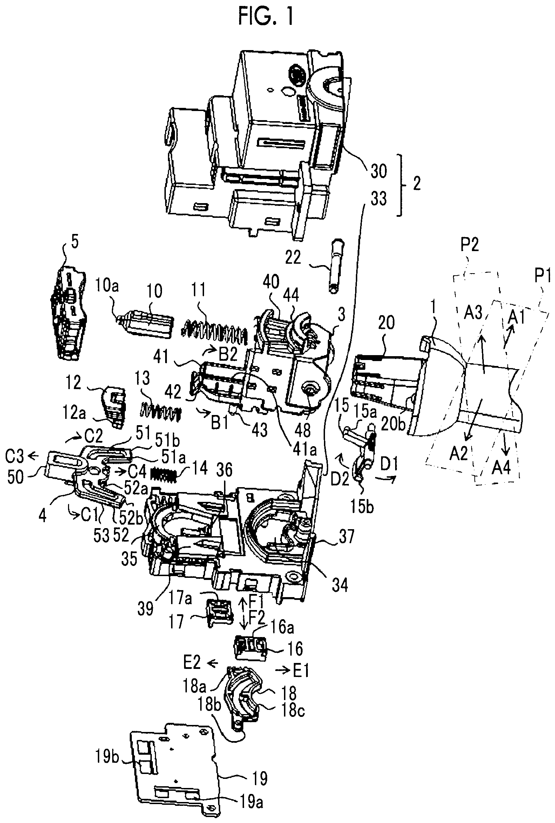

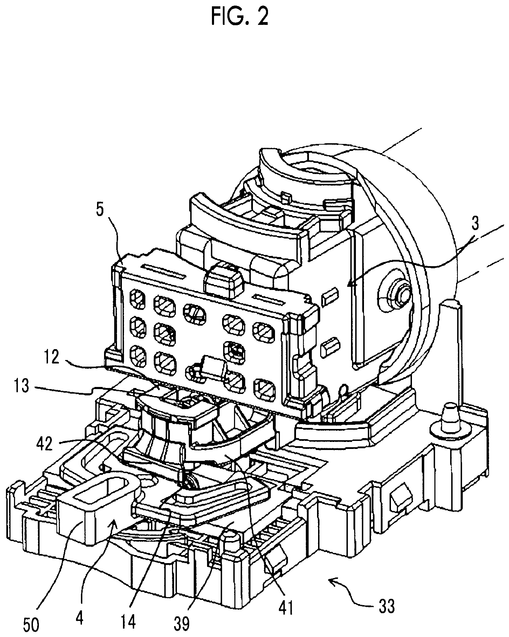

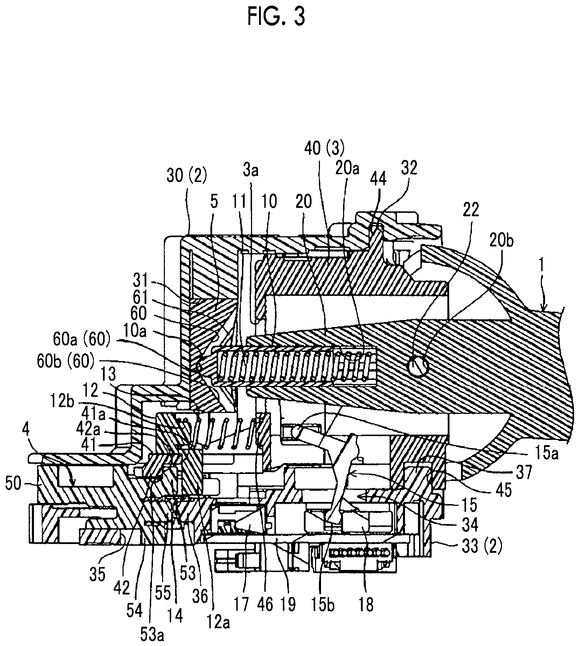

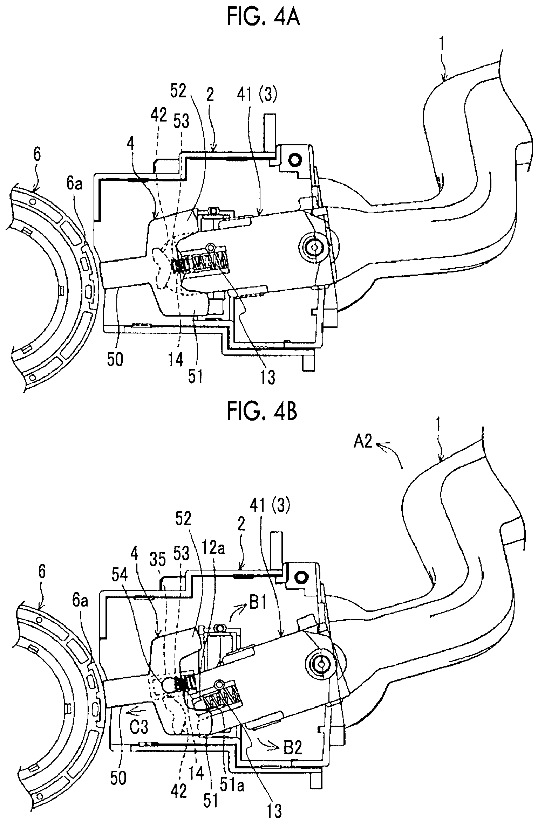

An embodiment of the present invention will be described in detail with reference to the drawings. Fig. 1 is an exploded perspective view of a turn signal switch device in this embodiment. Fig. 2 is an internal appearance perspective view for describing the positional relationship between a cancel lever 4 and a lower case 33 (a housing 2). Fig. 3 is a cross-sectional view of the turn signal switch device shown in Fig. 1. Figs. 4A and 4B are plan views describing an operation in which an operating lever 1 is rotationally operated from a neutral position to a right turn instruction position.

Each drawing of Figs. 4A, 4B, 11, and 12A to 16B is a diagram when the turn signal switch device of Fig. 1 is viewed from the back side, that is, a diagram as viewed in a direction of an arrow A3 in Fig. 1. Therefore, in each drawing, a rotation direction (a direction of A1 in Fig. 1) of a left turn instruction of the operating lever 1 is a clockwise direction in the drawing, and on the other hand, a rotation direction (a direction of A2 in Fig. 1) of a right turn instruction of the operating lever 1 is a counterclockwise direction in the drawing. Further, for simplification, the shape of the cancel lever 4 is simplified and shown with a leaf spring portion or the like omitted.

The turn signal switch device has the operating lever 1 which is exposed to the interior of a vehicle by being provided so as to protrude outwardly from the housing 2, a holder 3 which supports a base portion of the operating lever 1 so as to be rotatable on one plane, the housing 2 which is mounted in a steering column of the automobile and supports the holder 3 so as to be rotatable on the other plane intersecting the one plane, and the cancel lever 4 which is provided in the housing 2 so as to be movable according to the rotation of the holder 3 and can perform an advance and retreat movement with respect to a rotation locus of a cancel projection 6a which rotates integrally with a steering shaft, and a rotation.

The operating lever 1 can be rotationally operated in four directions; the directions of A1 to A4 in Fig. 1. The direction of A1 and the direction of A2 are in the same plane parallel to one plane, that is, a plane P1 (a plane orthogonal to an axis of a guide projection portion 44 (described later)), and the direction of A3 and the direction of A4 are in the same plane parallel to the other plane, that is, a plane P2 (a plane orthogonal to an axis of a shaft 22 (described later)) intersecting the plane P1. If the operating lever 1 is rotated in the direction of A1 or the direction of A2, the operating lever 1 is latched at a left turn instruction position or a right turn instruction position, and thus a left turn instruction output or a right turn instruction output is made from the turn signal switch device.

The turn signal switch device is mounted on the steering column of an automobile. The steering shaft (not shown) is disposed on the side opposite to the side to which the operating lever 1 protrudes, and the cancel lever 4 configuring the turn signal switch device interlocks with the steering shaft according to an operation of the operating lever 1 and a steering wheel operation.

With regard to the rotation operations in the direction of A3 and the direction of A4 of the operating lever 1, it is possible to assign any function according to an operation direction. For example, the rotation operation in the direction of A4 enables latching, thereby providing a function of switching headlights to a high beam, and the rotation operation in the direction of A3 allows the operating lever 1 to automatically return without latching, thereby providing a function of lighting the headlights only during the operation.

The turn signal switch device has the features in the cancel lever 4 and a guide surface 39, as follows.

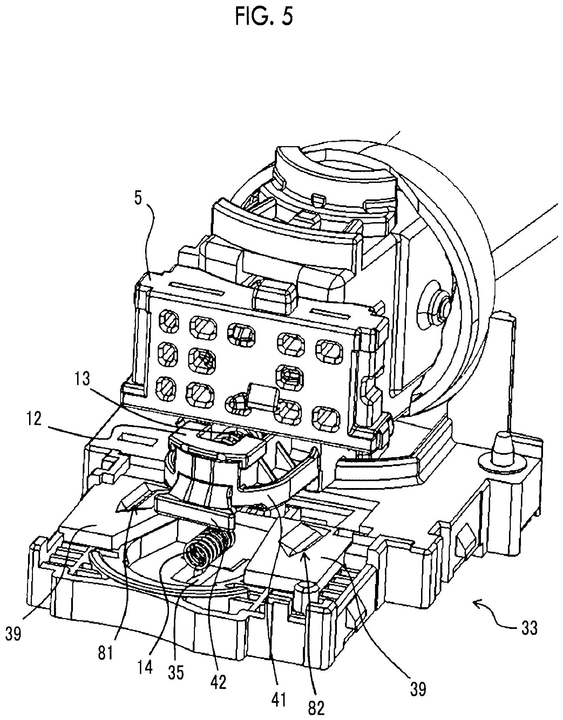

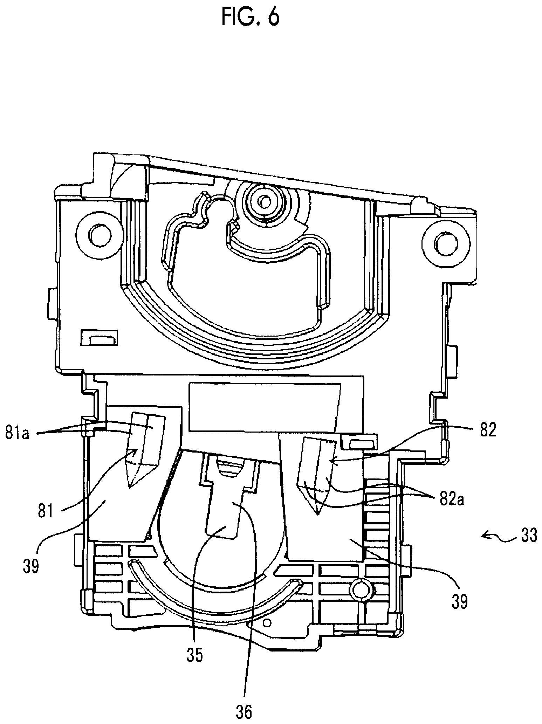

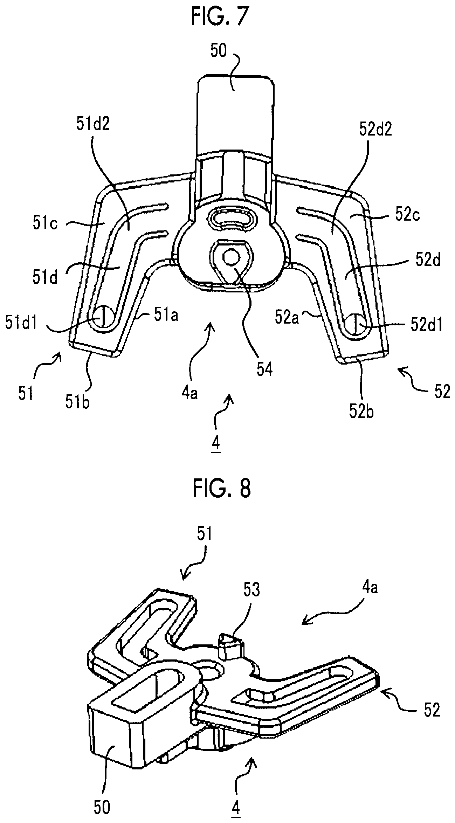

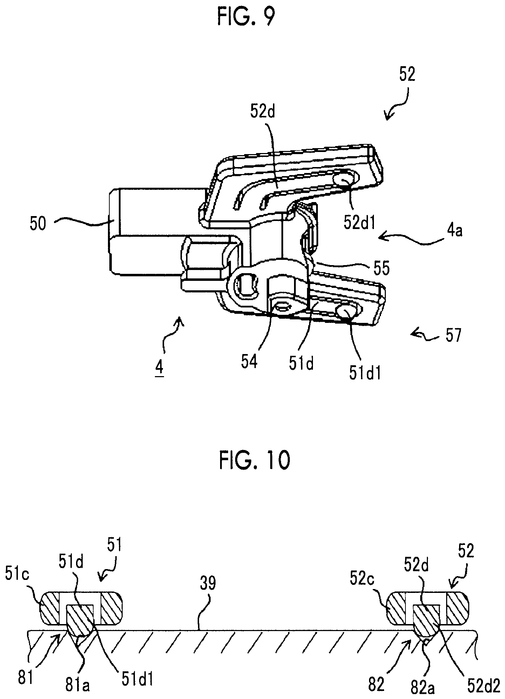

Fig. 5 is a diagram showing a state where the cancel lever 4 shown in Fig. 2 is removed. Fig. 6 is a diagram for describing a first cam face 81a and a second cam face 82a formed in the guide surface 39 of the lower case 33. Fig. 7 is an external view of the guide surface 39 side of the cancel lever 4. Fig. 8 is a perspective view of the cancel lever 4 as viewed from the protrusion portion 50 side. Fig. 9 is a perspective view of the cancel lever 4 as viewed from the side of the first and second protrusion portions 51d1 and 52d1. Fig. 10 is a cross-sectional configuration diagram of the cancel lever 4 and first and second recessed portions 81 and 82 at the positions of the first protrusion portion 51d1 and the second protrusion portion 52d1.

The cancel lever 4 performs an advance and retreat movement with respect to the steering shaft and is rotatable.

As shown in Figs. 7, 8, and 9, a first leaf spring portion 51d and a second leaf spring portion 52d are integrally molded in the cancel lever 4. The first leaf spring portion 51d and the second leaf spring portion 52d are in contact with the guide surface 39 which guides the movements (the advance and retreat movement and the rotation) of the cancel lever 4, by being elastically biased so as to be pressed against the guide surface 39.

As shown in Figs. 5 and 6, the guide surface 39 has the first recessed portion 81 and the second recessed portion 82 which guide the first leaf spring portion 51d and the second leaf spring portion 52d to predetermined positions.

As shown in Figs. 7 and 9, the first leaf spring portion 51d and the second leaf spring portion 52d respectively have the first protrusion portion 51d1 and the second protrusion portion 52d1 facing the guide surface 39.

As shown in Figs. 6 and 10, the first recessed portion 81 and the second recessed portion 82 of the guide surface 39 respectively have the first cam face 81a and the second cam face 82a with which the first protrusion portion 51d1 and the second protrusion portion 52d1 come into contact by being elastically biased so as to be pressed against the first cam face 81a and the second cam face 82a in the entire movement range of the cancel lever 4.

In the turn signal switch device, due to a configuration in which the first leaf spring portion 51d and the second leaf spring portion 52d are provided in the cancel lever 4 and the first leaf spring portion 51d and the second leaf spring portion 52d respectively come into contact with the first cam face 81a and the second cam face 82a formed in the guide surface 39 by being elastically biased so as to be pressed against the first cam face 81a and the second cam face 82a, it is possible to always bring the cancel lever 4 into contact with the first cam face 81a and the second cam face 82a (the guide surface 39) at the time of the advance and retreat movement and the time of the rotation of the cancel lever 4, and thus a gap is prevented from being formed between the cancel lever 4 and the guide surface 39, as in the related art, and abnormal noise which occurs due to the cancel lever 4 vibrating (behaving violently) can be prevented.

According to this configuration, it is possible to obtain the above effect only by changing the shapes of the cancel lever 4 and the guide surface 39, and addition of a new component is not required, and thus the above effect can be realized with a simple configuration.

In Fig. 1, the operating lever 1 has a base portion 20 which configures a base side and is accommodated in the housing 2, and an operating portion (not shown) which is exposed to the interior of an automobile and operated by the driver.

The housing 2 is configured by integrating an upper case 30 and the lower case 33, and a space is formed on the inside thereof . The base portion 20 of the operating lever 1 and various components are accommodated in the space in the housing 2. The main components which are accommodated in the housing 2 are the holder 3, the cancel lever 4, a cam member 5, a first driver 10, a second driver 12, and an oscillating lever 15.

The holder 3 has a box-shaped main body part 40 formed such that the base portion 20 of the operating lever 1 can be inserted therein and is exposed on the cam member 5 side. The main body part 40 has a protrusion surface portion 41 which protrudes to the steering shaft side, and the guide projection portion 44 which protrudes from the upper surface of the main body part 40. The guide projection portion 44 is rotatably supported on the housing 2. Here, the holder 3 is supported on the housing 2 so as to be rotatable about the guide projection portion 44, and therefore, if the operating lever 1 is rotationally operated in the direction of A1 or the direction of A2, the protrusion surface portion 41 of the holder 3 rotates in a direction of B1 or a direction of B2. The base portion 20 is supported on the holder 3 so as to be rotatable about a shaft 22 inserted into a shaft insertion portion 20b which is formed in the base portion 20 and a shaft insertion portion 48 which is formed in the holder 3. Therefore, if the operating lever 1 is rotationally operated in the direction of A3 or the direction of A4, the holder 3 does not rotate and only the operating lever 1 rotates.

An engagement surface portion 42 is formed on the lower surface side of a tip portion of the protrusion surface portion 41 of the holder 3 and is engaged with and disengaged from an engagement projection 53 provided at the cancel lever 4. The details thereof will be described later. Further, a second driver insertion hole 41a (an insertion hole portion) which guides the second driver 12 so as to be able to reciprocate is formed in the protrusion surface portion 41 (Fig. 3). Further, as shown in Fig. 1, an insertion pin 43 which is inserted into an elongated hole portion 17a of a second slider 17 (described later) is formed on the lower surface of the protrusion surface portion 41.

The first driver 10 is slidably mounted in an accommodation recessed portion 20a of the base portion 20 with a first elastic member 11 interposed therebetween, and is elastically biased such that a tip portion 10a is pressed against the cam member 5 which is disposed to face the base portion 20. The tip portion 10a of the first driver 10 is guided to the cam member 5, and the first driver 10 slides in the four directions according to the rotation operation of the operating lever 1. That is, a cross-shaped cam groove (not shown) corresponding to the operation direction of the operating lever 1 is formed in a cam face portion 60 of the cam member 5, the cam face portion 60 facing the base portion 20. This cam groove is most recessed at a central portion 60a corresponding to the neutral position of the operating lever 1 and has an inclined surface 60b rising toward a peripheral direction from the central portion 60a. Further, a projection for latching 61 (described later) (Fig. 3) is formed at a portion of the inclined surface 60b. The first driver 10 is elastically pressed against the cam groove, and therefore, when the operating lever 1 is rotationally operated in any one of the four directions, whereby the tip portion 10a is located on the inclined surface 60b, the operating lever 1 is elastically biased in a direction automatically returning to the neutral position, by the elastic biasing force of the first elastic member 11.

As shown in Fig. 3, the second driver 12 is mounted on the holder 3 with a second elastic member 13 interposed therebetween and is elastically biased toward the steering shaft side. Here, one end of the second elastic member 13 is held by a projection holding portion 12b of the second driver 12, and the other end is held by a second elastic member holding portion 46 of the holder 3. The second driver 12 has a pressed portion 12a protruding downward, and the pressed portion 12a is inserted into the second driver insertion hole 41a formed in the protrusion surface portion 41 of the holder 3. A cancel operation (described later) is performed by the interlocking of the pressed portion 12a with the cancel lever 4.

The cancel lever 4 has the protrusion portion 50 protruding toward the rotation locus of the cancel projection 6a (Fig. 4) which rotates integrally with the steering shaft, and first and second arm portions 51 and 52 formed so as to protrude toward the operating lever 1 side. A recessed portion 4a is formed between the first arm portion 51 and the second arm portion 52. In the first arm portion 51, a first pressing surface portion 51a facing the second arm portion 52 presses the pressed portion 12a when the cancel operation is performed after the operating lever 1 is rotationally operated in the right turn instruction direction (the direction of A2). In the first arm portion 51, a second pressing surface portion 51b on the side opposite to the protruding direction of the protrusion portion 50 presses the pressed portion 12a when the cancel operation is performed in a state of being locked due to an operator holding the operating lever 1, or the like, after the operating lever 1 is rotationally operated in the right turn instruction direction (the direction of A2) and latched. The second arm portion 52 has first and second pressing surface portions 52a and 52b having the same function at the time of a left turn instruction. Due to the above configuration, as will be described later, even if the operating lever 1 latched at the right turn or left turn instruction position is locked, if the steering wheel is returned to the original state after the right turn or the left turn, it is possible to reliably automatically return the operating lever 1 to the neutral position.

Further, on the upper surface of the cancel lever 4, the engagement projection 53 is formed to be erect at the intermediate position between the first arm portion 51 and the second arm portion 52 at an edge portion on the recessed portion 4a side. As shown in Fig. 3, the cancel lever 4 is mounted on a third elastic member holding portion 36 (a cancel lever holding portion) of the lower case 33 with an elastic member for cancel (a third elastic member 14) interposed therebetween, and on the lower surface of the cancel lever 4, a lower protruding portion 54 is formed so as to protrude.

A guide elongated hole 35 which guides the lower protruding portion 54 of the cancel lever 4 so as to be able to advance to and retreat from the steering shaft side, that is, the rotation locus side of the cancel projection 6a is formed in the lower case 33 of the housing 2. Therefore, the lower protruding portion 54 is guided by the guide elongated hole 35 so as to be able to perform an advance and retreat movement in a direction of C3 or a direction of C4 and the cancel lever 4 is rotatable in a direction of C1 or a direction of C2 in Fig. 1 at an arbitrary position in the guide elongated hole 35.

The cancel lever 4 is constantly elastically biased toward the steering shaft by the third elastic member 14 (the elastic member for cancel) which is composed of, for example, a coil spring which is mounted on the housing 2. That is, the third elastic member 14 is supported in a constantly compressed state between a holding portion 55 (described later) and the third elastic member holding portion 36 of the lower case 33, as shown in Fig. 3.

The cancel lever 4 is rotatable from the neutral position to at least a left turn instruction rotational position and a right turn instruction rotational position.

As shown in Figs. 2, 7, 8, 9, and the like, the cancel lever 4 has the protrusion portion 50 which protrudes toward the rotation locus of the cancel projection 6a and advances to and retreats from the rotation locus, the first arm portion 51, the second arm portion 52, and the engagement projection 53.

The first arm portion 51 and the second arm portion 52 protrude in the direction opposite to the protruding direction of the protrusion portion 50 and rotate at the time of a retreat movement from the rotation locus of the cancel projection 6a, thereby coming into contact with the holder 3 and rotating the holder 3 so as to automatically return the operating lever 1 from the left turn instruction rotational position or the right turn instruction rotational position to the neutral position.

As shown in Fig. 7 and the like, the first leaf spring portion 51d is integrally molded in the first arm portion 51. The second leaf spring portion 52d is integrally molded in the second arm portion 52.

The first protrusion portion 51d1 protruding toward the first cam face 81a is formed on the tip side of the first leaf spring portion 51d.

The second protrusion portion 52d1 protruding toward the second cam face 82a is formed on the tip side of the second leaf spring portion 52d.

The first leaf spring portion 51d and the second leaf spring portion 52d respectively have a first curved portion 51d2 which is curved between the protrusion portion 50 side (the base side) and the first protrusion portion 51d1 in a plane direction along the guide surface 39, and a second curved portion 52d2. In this manner, the first curved portion 51d2 and the second curved portion 52d2 are provided, whereby a spring constant can be reduced, compared to a case where the first leaf spring portion 51d and the second leaf spring portion 52d are made in a linear shape.

As shown in Figs. 7, 9, and the like, the first arm portion 51 has a first arm portion main body 51c formed so as to surround the first leaf spring portion 51d. The first leaf spring portion 51d is integrally molded in the cancel lever 4 so as to be movable in a direction bringing the first protrusion portion 51dl close to the first cam face 81a (the guide surface 39) by being bent with the base side of the first arm portion 51 as a supporting point, inside of the first arm portion main body 51c. The second leaf spring portion 52d is integrally molded in the cancel lever 4 so as to be movable in a direction bringing the second protrusion portion 52d1 close to the second cam face 82a (the guide surface 39) by being bent with the base side of the second arm portion 52 as a supporting point, inside of the second arm portion main body 52c.

As shown in Fig. 3, an opening portion 34 for inserting a linking portion 15b provided to extend downward from the oscillating lever 15, and a guide projection portion 37 supporting the holder 3 in a rotation direction are formed at the lower case 33 configuring the housing 2. A support shaft portion 15a of the oscillating lever 15 is oscillatably supported on the base portion 20 of the operating lever 1. Therefore, if the operating lever 1 is rotationally operated in the direction of A3 or the direction of A4 in Fig. 1, the oscillating lever 15 oscillates in a direction of D1 or a direction of D2.

The linking portion 15b is engaged with an oscillating member 18 which is disposed below the opening portion 34 of the lower case 33, thereby oscillating the oscillating member 18. In the oscillating member 18, a rotation center portion 18a is oscillatably supported on the lower case 33, and an arc-shaped engaged portion 18c is engaged with the linking portion 15b. A protrusion portion 18b which is formed at an end portion on the side opposite to the rotation center portion 18a, of the engaged portion 18c, is inserted into an elongated hole portion 16a formed in a first slider 16. Therefore, the first slider 16 can slide along a direction of E1 and a direction of E2 in Fig. 1 by the oscillating member 18 which rotates according to the oscillation of the oscillating lever 15.

A first contact portion 19a and a second contact portion 19b are disposed at a substrate 19. The first slider 16 has a contact (not shown) which comes into contact with the first contact portion 19a. By sliding the first slider 16 along the direction of E1 or the direction of E2 according to the oscillation in the direction of D1 or the direction of D2 of the oscillating lever 15, it is possible to switch the contact state between the contact of the first slider 16 and the first contact portion 19a.

The second slider 17 which slides according to the rotation of the holder 3 is provided in the housing 2. The linking pin 43 formed on the lower surface of the holder 3 is inserted into the elongated hole portion 17a which is formed in the second slider 17. Therefore, the holder 3 rotates in the direction of B1 or the direction of B2, whereby the second slider 17 slides in a direction of F2 or a direction of F1 in Fig. 1.

The second slider 17 is provided with a contact (not shown) which comes into contact with the second contact portion 19b, and slides in the direction of F1 or the direction of F2, thereby being able to switch the contact state with the second contact portion 19b.

Fig. 3 is a vertical sectional view of the turn signal switch device. The first driver 10 is supported on the steering shaft side (the left side in the drawing) of the base portion 20 of the operating lever 1 with the first elastic member 11 interposed therebetween. The tip portion of the base portion 20 of the operating lever 1 and the tip portion 10a of the first driver 10 protrude toward the cam member 5 through an opening portion 3a of the holder 3, as shown in Fig. 3. Then, the tip portion 10a of the first driver 10 is in contact with the cam face portion 60 of the cam member 5.

In the cam face portion 60, the cam groove extending in the four directions from the central portion 60a is formed, as described above, and the projection for latching 61 for latching the operating lever 1 is formed at a desired position above the cam groove. The projection for latching 61 is formed, for example, so as to switch the headlights to a high beam or latch the operating lever 1 when performing the left turn instruction or the right turn instruction. Fig. 3 shows a state where the operating lever 1 is located at the neutral position, and the tip portion 10a of the first driver 10 is located at the central portion of the cam face portion 60.

If the operating lever 1 is rotationally operated in the direction of A1 or the direction of A2 of Fig. 1 from the state of Fig. 3, the tip portion 10a of the first driver 10 moves in a direction perpendicular to the plane of Fig. 3 and climbs up the inclined surface 60b of the cam face portion 60. If the operating lever 1 is rotated to the left turn instruction position or the right turn instruction position, the tip portion 10a of the first driver 10 is engaged with the projection for latching 61, and thus a state where the operating lever 1 is latched is created.

If a force is applied to the latched operating lever 1 in a direction automatically returning the operating lever 1 to the neutral position, the tip portion 10a of the first driver 10 overrides the projection for latching 61 and moves to the inclined surface 60b on the central portion 60a side of the cam groove. Then, the tip portion 10a of the first driver 10 comes down the inclined surface 60b of the cam face portion 60 due to the elastic biasing force of the first elastic member 11, thereby returning back to the central portion 60a, and the latching state of the operating lever 1 is released, whereby the operating lever 1 returns to the neutral position.

In the upper case 30 configuring the housing 2, an accommodation portion 31 is formed in the inner surface thereof, and the cam member 5 is accommodated therein. Further, a recess-shaped guide recessed portion 32 into which the guide projection portion 44 of the holder 3 is fitted is formed in the inner surface of the upper case 30, and the guide projection portion 37 which is fitted into a guide recessed portion 45 formed in the lower surface of the holder 3 is formed on the inner surface of the lower case 33. Therefore, the holder 3 is supported on the housing so as to be rotatable in the direction of B1 or B2 in Fig. 1.

As shown in Fig. 3, the second elastic member holding portion 46 which holds the second elastic member 13 is formed below the side surface on the rotation locus side of the cancel projection 6a, of the holder 3. The second driver 12 is supported on the holder 3 with the second elastic member 13, which is in a constantly compressed state, interposed therebetween, and the pressed portion 12a protrudes downward through the second driver insertion hole 41a of the holder 3. Further, in Fig. 3, the pressed portion 12a elastically biased by the second elastic member 13 is located in the recessed portion 4a of the cancel lever 4 and pressed to be brought into contact with the first arm portion 51 or the second arm portion 52 according to the rotation of the cancel lever 4.

Further, in the lower case 33 configuring the housing 2, the third elastic member holding portion 36 is formed on the surface facing the side surface on the operating lever 1 side, of the cancel lever 4. The holding portion 55 which holds the third elastic member 14 is formed in the cancel lever 4. The third elastic member 14 is provided between the third elastic member holding portion 36 and the holding portion 55. Due to such a configuration, the cancel lever 4 can reliably perform the advance and retreat movement with respect to the rotation locus of the cancel projection 6a and the rotation, with a simpler configuration, and therefore, it is possible to improve the reliability of the turn signal switch device and it is possible to attain a further reduction in size.

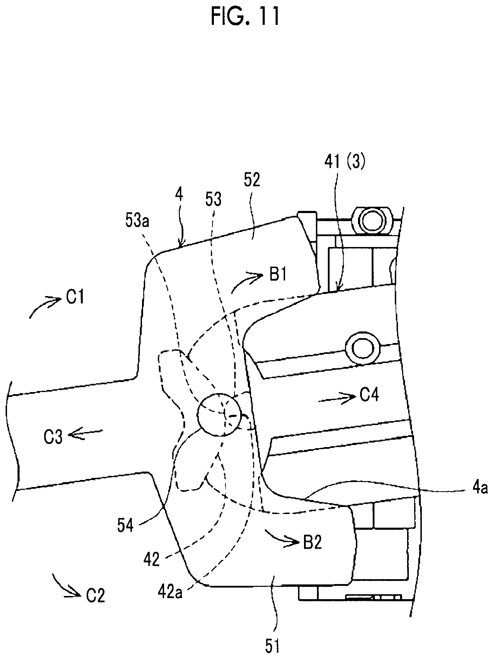

When the operating lever 1 is located at the neutral position, as shown in Fig. 11, the engagement projection 53 formed on the upper surface of the cancel lever 4 and the engagement surface portion 42 of the holder 3 are engaged with each other. A surface having a first apex portion 53a on the steering shaft side is formed in the engagement projection 53, and a surface having a second apex portion 42a which comes into contact with the engagement projection 53 is formed in the engagement surface portion 42. Here, the engagement projection 53 and the engagement surface portion 42 come into contact with each other at the first apex portion 53a and the second apex portion 42a, and the cancel lever 4 is withdrawn out of the rotation locus of the cancel projection 6a in a state where the third elastic member 14 is further compressed. Therefore, the cancel lever 4 is elastically biased toward the rotation locus of the cancel projection 6a with a greater force.

Next, an operation of the turn signal switch device will be described based on Figs. 4A, 4B, and 11 to 16B.

In an operation of the turn signal switch device shown below, at the time of the advance and retreat movement and the time of the rotation of the cancel lever 4, the cancel lever 4 is always in contact with the guide surface 39 due to the above-described configuration. For this reason, a gap does not occur between the cancel lever 4 and the guide surface 39, and thus abnormal noise which is generated due to vibration of the cancel lever 4 can be prevented.

In each drawing, some of the components and the like are omitted. First, an operation in which right turn is performed by rotating the steering wheel in the rightward direction after the operating lever 1 is rotationally operated to and latched at the right turn instruction position, and thereafter, the operating lever 1 is automatically returned to the neutral position by rotating the steering wheel in a return direction (the leftward direction) will be described. Figs. 4A and 4B are plan views describing an operation in which the operating lever 1 is rotationally operated from the neutral position to the right turn instruction position.

The cancel projection 6a is formed at an outer edge portion of a cancel cam member 6 having a ring shape. Therefore, the rotation locus of the cancel projection 6a follows the outer edge portion of the cancel cam member 6.

Fig. 4A shows a state where the operating lever 1 is located at the neutral position. The engagement projection 53 of the cancel lever 4 is engaged with the engagement surface portion 42 of the holder 3, and the protrusion portion 50 of the cancel lever 4 is withdrawn out of the rotation locus of the cancel projection 6a. As shown in Fig. 4A, the cancel projection 6a of the cancel cam member 6 faces the tip of the protrusion portion 50 of the cancel lever 4.

Fig. 11 is an enlarged view of a portion of Fig. 4A. In Fig. 11, if the operating lever 1 is rotationally operated in the direction of A1 or the direction of A2, the holder 3 rotates in the direction of B1 or the direction of B2, and thus the cancel lever 4 moves in the direction of C3. That is, the cancel lever 4 is constantly elastically biased toward the steering shaft side (in the direction of C3 in the drawing) by the third elastic member 14 (Fig. 3), and therefore, if the engagement surface portion 42 rotates integrally with the holder 3, the engagement projection 53 of the cancel lever 4 slides on the engagement surface portion 42, thereby deviating from the end portion of the engagement surface portion 42, and thus the cancel lever 4 moves in the direction of C3.

Fig. 4B shows a state where the operating lever 1 has been rotationally operated to the right turn instruction position. If the operating lever 1 is rotationally operated to the right turn instruction position, the holder 3 is rotated in the direction of B2, and thus, as described above, the engagement projection 53 enters a state of deviating from the engagement surface portion 42 of the holder 3, and thus the cancel lever 4 moves in the direction of C3. In this state, the tip portion 10a of the first driver 10 shown in Fig. 3 slides on the cam face portion 60 and is engaged with the projection for latching 61, and thus the operating lever 1 is latched.

At this time, since the steering wheel has not been rotated, the tip of the protrusion portion 50 of the cancel lever 4 which moves in the direction of C3 is brought into contact with and pressed against the outer peripheral surface of the cancel projection 6a. Further, a state where the pressed portion 12a shown in Fig. 3 comes into contact with or comes close to the first pressing surface portion 51a of the first arm portion 51 is created. At this time, the lower protruding portion 54 formed on the lower surface side of the cancel lever 4 is located in the middle of the guide elongated hole 35 of the housing 2.

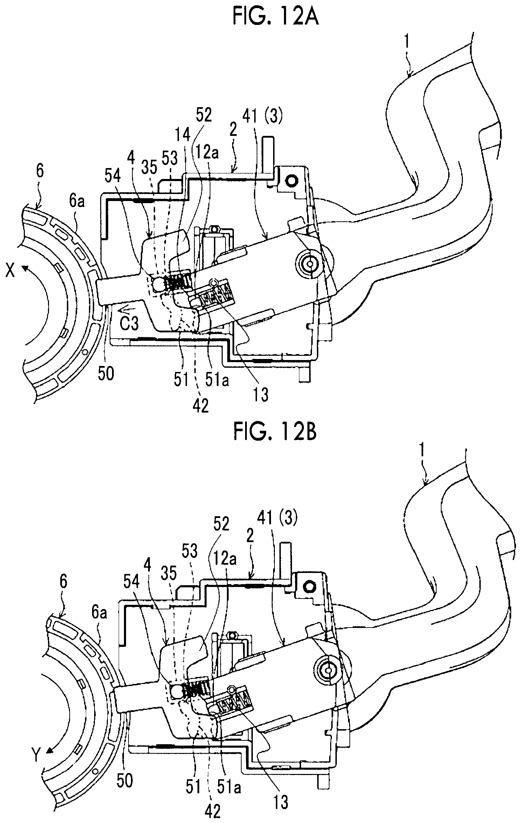

Figs. 12A and 12B are plan views describing an operation of the operating lever 1 on its way to be automatically returned from the right turn instruction position to the neutral position. Fig. 12A shows a state where the steering wheel has been rotated to the right (in a direction of an arrow X in the drawing) in Fig. 4B. If the steering wheel is rotated to the right, the cancel cam member 6 rotates in the direction of X, whereby the cancel projection 6a deviates from the tip portion of the protrusion portion 50. Therefore, the cancel lever 4 elastically biased by the third elastic member 14 moves in the direction of C3, and thus the protrusion portion 50 advances into the rotation locus of the cancel projection 6a. At this time, the lower protruding portion 54 (the cancel lever 4) shown in Fig. 3 moves in the direction of C3 in the guide elongated hole 35 of the housing 2.

Fig. 12B shows a process of rotating the steering wheel rotated to the right for the right turn to the left, thereby returning the steering wheel. As in Fig. 12A, if the steering wheel is rotated to the right, the protrusion portion 50 of the cancel lever 4 advances into the rotation locus of the cancel projection 6a, and therefore, thereafter, on the steering wheel's way to return, the cancel projection 6a comes into contact with the side surface of the protrusion portion 50 of the cancel lever 4.

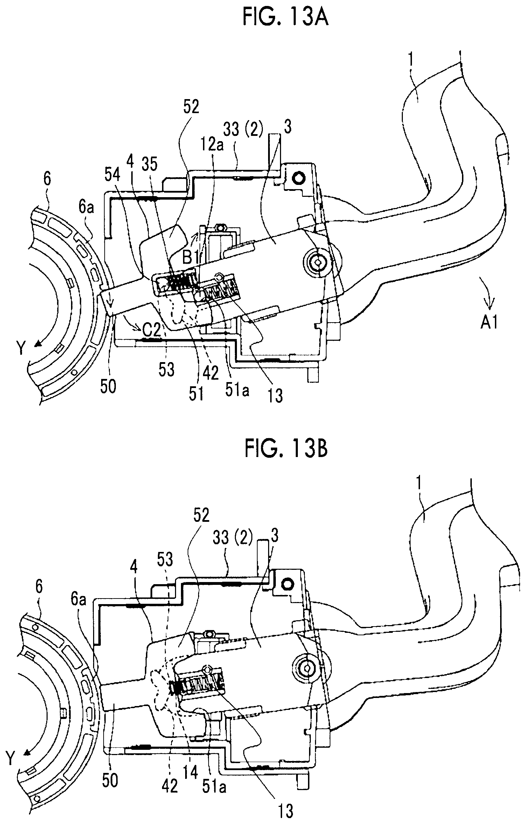

Figs. 13A and 13B are plan views describing an operation until the operating lever 1 of Fig. 12B is automatically returned to the neutral position. Fig, 13A shows a state where the steering wheel has been returned by being further rotated to the left (in a direction of an arrow Y of the drawing) from the state of Fig. 12B. If the steering wheel is returned, the side surface of the protrusion portion 50 of the cancel lever 4 is pressed by the cancel projection 6a, whereby the cancel lever 4 is rotated in the direction of C2. In this way, the first pressing surface portion 51a formed in the first arm portion 51 of the cancel lever 4 presses the pressed portion 12a provided at the holder 3 in the direction of B1. Therefore, the operating lever 1 is rotated in the direction of A1, and therefore, the tip portion 10a of the first driver 10 overrides the projection for latching 61 of the cam face portion 60, whereby the latching state is released, and the holder 3 is automatically returned to the original position by the biasing force of the first driver 10, and therefore, the operating lever 1 automatically returns to the neutral position.

If the holder 3 is rotated so as to return back to the original position, in the process of being changed from the state of Fig. 13A to the state of Fig. 13B, the engagement projection 53 of the cancel lever 4 comes into contact with and runs on the end portion of the engagement surface portion 42 of the holder 3. Then, the engagement projection 53 returns back to the state of Fig. 4A while being pressed and rotated in a direction away from the rotation locus of the cancel projection 6a by the engagement surface portion 42. Fig. 13B shows a state where the steering wheel is returned back to the neutral position and thus the cancel operation of the operating lever 1 is ended. The disposition of each component in Fig. 13B is the same as that in Fig. 4A.

In this manner, the operating lever 1 is rotationally operated to and latched at the right turn instruction position, and the steering wheel is rotated to the right so as to perform the right turn, and thereafter, when the steering wheel is returned, the operating lever 1 is automatically returned to the neutral position by the operation of the cancel lever 4. The turn signal switch device according to the present invention is configured such that in a case where for any cause, the operating lever 1 has been locked in a state where it has been latched at the right turn instruction position, the cancel lever 4 is rotated by receiving a force of a predetermined magnitude or more from the cancel projection 6a, whereby the cancel operation is performed. The operation will be described.

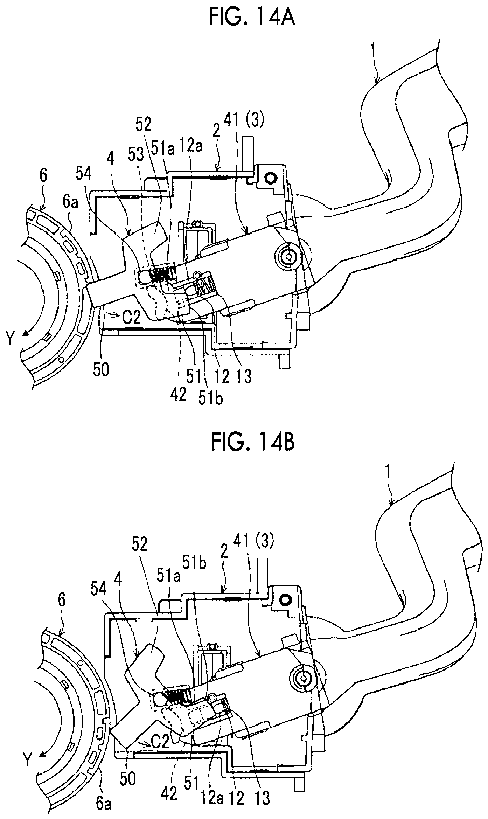

Figs. 14A and 14B are plan views describing an operation in which the operating lever 1 locked at the right turn instruction position is automatically returned to the neutral position. In a case where the operating lever 1 has been locked in a latched state, if the steering wheel is returned, since the holder 3 does not rotate, the cancel lever 4 receives a force of a predetermined magnitude or more from the cancel projection 6a which rotates in the clockwise direction in the drawing, thereby being rotated in the direction of C2 while the first pressing surface portion 51a presses and moves the pressed portion 12a (Fig. 3) to the operating lever 1 side. That is, as shown in Fig. 3, the second driver 12 is mounted on the holder 3 with the second elastic member 13 interposed therebetween, and therefore, if the cancel lever 4 is pressed with a force of a predetermined magnitude or more by the cancel projection 6a through the first pressing surface portion 51a, the pressed portion 12a is moved toward the operating lever 1 side.

In this manner, if the cancel lever 4 rotates in a state where the holder 3 does not rotate, as shown in Fig. 14A, the pressing surface portion 51a of the cancel lever 4 presses the pressed portion 12a against the elastic biasing force of the second elastic member 13, and therefore, the cancel lever 4 is rotated in the direction of C2.

If the steering wheel is further returned (rotated in the direction of Y) in the state of Fig. 14A, as shown in Fig. 14B, the cancel lever 4 is further rotated in the direction of C2. In this state, the contact position between the pressed portion 12a and the first arm portion 51 of the cancel lever 4 moves from the first pressing surface portion 51a to the second pressing surface portion 51b, and the tip portion of the protrusion portion 50 comes in sliding contact with the outer peripheral surface of the cancel projection 6a. If the cancel lever 4 continues to rotate, the protrusion portion 50 deviates from the cancel projection 6a, and the cancel lever 4 and the operating lever 1 are returned back to the original positions (the positions shown in Fig. 4A) by the elastic biasing force of the second elastic member 13, and thus the cancel operation is ended.

In this manner, if the steering wheel is returned by being rotated to the left in a state where the operating lever 1 has been locked at the right turn support position, the cancel lever 4 can continue to rotate, and thus it is possible to retract the protrusion portion 50 from the rotation locus of the cancel projection 6a, and therefore, it is possible to prevent breakage of components. Further, in the latched operating lever 1, if locking is released in the process of being changed from the state of Fig. 14A to the state of Fig. 14B, latching is released.

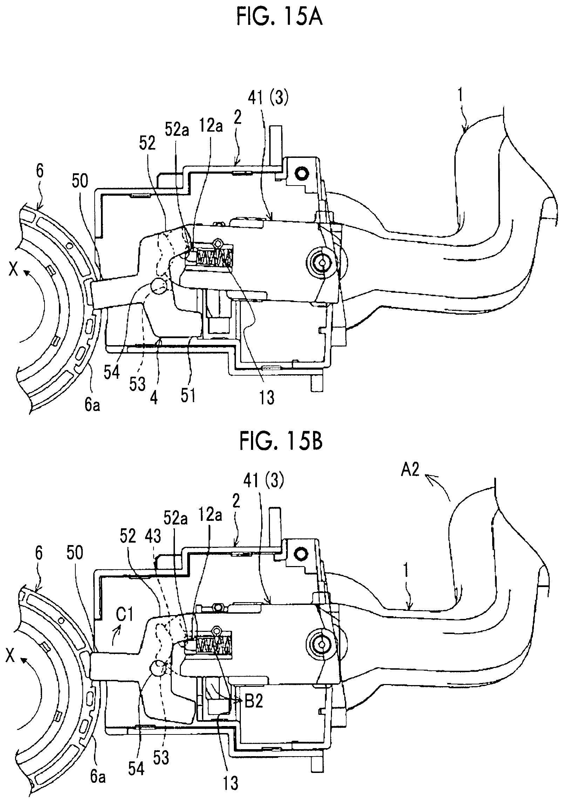

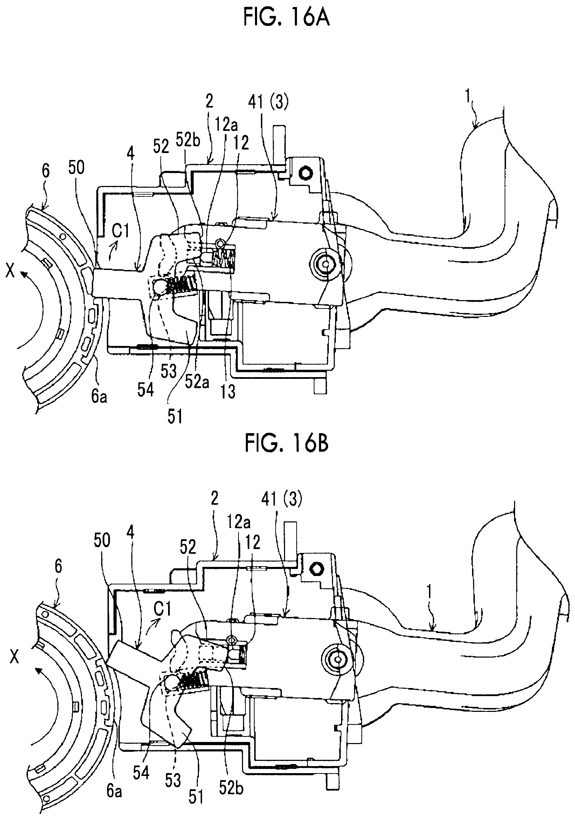

Next, an operation in which the operating lever 1 latched at the left turn instruction position is automatically returned to the neutral position will be described briefly based on Figs. 15A, 15B, 16A, and 16B. First, if the operating lever 1 is rotated from the state of Fig. 4A to the left turn instruction position, the engagement between the engagement surface portion 42 of the holder 3 and the engagement projection 53 of the cancel lever 4 is released as the holder 3 rotates in the direction of B1, and the protrusion portion 50 of the cancel lever 4 advances toward the rotation locus of the cancel projection 6a and comes into contact with the outer peripheral surface of the cancel projection 6a. In this state, if the left turn is performed by rotating the steering wheel to the left, the cancel projection 6a also rotates, and thus the protrusion portion 50 of the cancel lever 4 advances into the rotation locus of the cancel projection 6a due to the elastic biasing force of the third elastic member 14.

Figs. 15A and 15B are plan views describing an operation in which the operating lever 1 is automatically returned from the left turn instruction position to the neutral position. Fig. 15A shows a state where the cancel projection 6a comes into contact with the protrusion portion 50 of the cancel lever 4 when the steering wheel rotated to the left is returned by being rotated in the rightward direction (the direction of X). Fig. 15B shows a state when the steering wheel has been further rotated in the rightward direction. In Fig. 15B, the cancel lever 4 is rotated in the direction of C1, and therefore, the pressed portion 12a is pressed in the clockwise direction in the drawing by the first pressing surface portion 52a of the second arm portion 52. Therefore, the holder 3 is rotated in the direction of B2 and the operating lever 1 is rotated in the direction of A2.

If the steering wheel is further rotated in the rightward direction, the latching state of the operating lever 1 which is located at the left turn instruction position is released. Then, the operating lever 1 is rotated in the direction of A2 so as to automatically return to the neutral position, the operating lever 1 and the cancel lever 4 automatically return to the same state as that in Fig. 13B, and thus the cancel operation is ended.

Figs. 16A and 16B are plan views describing an operation in which the operating lever 1 locked in a state of being latched at the left turn instruction position is automatically returned to the neutral position. When the steering wheel is returned by being rotated in the rightward direction, as shown in Fig. 16A, the cancel lever 4 is rotated in the direction of C1, and thus the pressing surface portion 52a of the cancel lever 4 presses the pressed portion 12a against the elastic biasing force of the second elastic member 13, thereby moving it to the operating lever 1 side.

In the state of Fig. 16A, if the steering wheel is returned by being further rotated in the rightward direction (the direction of X), as shown in Fig. 16B, the cancel lever 4 is further rotated in the direction of C1, and thus the tip portion of the protrusion portion 50 comes in sliding contact with the outer peripheral surface of the cancel projection 6a. Then, the cancel lever 4 continues to rotate, whereby the protrusion portion 50 is withdrawn from the rotation locus of the cancel projection 6a. In this way, even if the operating lever 1 has been locked, the cancel lever 4 can rotate, and thus breakage of components can be prevented.

As described above, according to the turn signal switch device of this embodiment, it is possible to always bring the cancel lever 4 into contact with the guide surface 39 at the time of the advance and retreat movement and the time of the rotation of the cancel lever 4, and thus a gap does not occur between the cancel lever 4 and the guide surface 39, and abnormal noise which occurs due to vibration of the cancel lever 4 can be prevented.

Further, according to the turn signal switch device, the above-described function is provided to the cancel lever 4 and the guide surface 39, whereby it is possible to obtain the effect of suppressing abnormal noise, and addition of a new component is not required, and thus the above effect can be realized with a simple configuration.

Further, in the turn signal switch device, by providing the first cam face 81a and the second cam face 82a in the guide surface 39, the first protrusion portion 51d1 and the second protrusion portion 52d1 of the cancel lever 4 are held at predetermined positions, and therefore, it is possible to maintain the cancel lever 4 in a stable standby state with a simple configuration, and generation of abnormal noise due to vibration or the like can be prevented.

Further, in the turn signal switch device, the first recessed portion 81 and the second recessed portion 82 formed in the guide surface 39 are provided to extend in the direction of the advance and retreat movement of the cancel lever 4, and the first cam face 81a and the second cam face 82a inclined in a direction suppressing the rotational movements of the first protrusion portion 51d1 and the second protrusion portion 52d1 at the time of the rotation of the cancel lever 4 are formed, whereby the vibration in the rotation direction of the cancel lever 4 can be suppressed without interfering with the advance and retreat movement of the cancel lever 4.

Further, according to the turn signal switch device, the first leaf spring portion 51d and the second leaf spring portion 52d respectively have the first curved portion 51d2 which is curved between the protrusion portion 50 side (the base side) and the first protrusion portion 51d1 in a plane direction along the guide surface 39, and the second curved portion 52d2. In this manner, the first curved portion 51d2 and the second curved portion 52d2 are provided, whereby a spring constant can be reduced, compared to a case where the first leaf spring portion 51d and the second leaf spring portion 52d are made in a linear shape.

Further, according to the turn signal switch device, the cancel lever 4 is provided with the first arm portion 51 and the second arm portion 52, and thus at the time of the retreat movement from the rotation locus of the cancel projection 6a, the cancel lever 4 is rotated and brought into contact with the holder 3, whereby it is possible to automatically return the operating lever 1 from the left turn instruction rotational position or the right turn instruction rotational position to the neutral position.

According to the turn signal switch device, the cancel lever 4 is provided with two leaf spring portions; the first leaf spring portion 51d and the second leaf spring portion 52d, whereby the vibration of the cancel lever 4 can be stably suppressed.

Further, according to the turn signal switch device, the first protrusion portion 51d1 and the second protrusion portion 52d1 are respectively formed on the sides of the tips of the first leaf spring portion 51d and the second leaf spring portion 52d, and therefore, the first leaf spring portion 51d and the second leaf spring portion 52d can be easily bent. Further, the cancel lever 4 can be supported in a well-balanced manner by making each of the first leaf spring portion 51d and the second leaf spring portion 52d a double-supported beam.

Further, according to the turn signal switch device, the first leaf spring portion 51d and the second leaf spring portion 52d are formed inside of the first arm portion 51 and the second arm portion 52 of the cancel lever 4, whereby at the time of the rotation of the cancel lever 4, the contact of the first leaf spring portion 51d and the second leaf spring portion 52d with other components can be avoided, and thus breakage of the first leaf spring portion 51d and the second leaf spring portion 52d can be prevented.

The present invention is not limited to the embodiment described above.

That is, those skilled in the art may perform various changes, combinations, sub-combinations, and substitutes with regard to the constituent components of the above-described embodiment within the technical scope or equivalent scope of the present invention.

Further, in the embodiment described above, a case where the first protrusion portion 51d1 and the second protrusion portion 52d1 of the cancel lever 4 are pressed against the first recessed portion 81 and the second recessed portion 82 formed in the guide surface 39, as shown in Figs. 5 and 6, has been illustrated. However, the first protrusion portion 51d1 and the second protrusion portion 52d1 may be made so as to be pressed against a flat surface of the guide surface 39. The shapes of the first recessed portion 81 and the second recessed portion 82 are not particularly limited.

Further, in the embodiment described above, a case where two leaf spring portion; the first leaf spring portion 51d and the second leaf spring portion 52d, are integrally molded in the cancel lever 4 has been illustrated. However, the number of leaf springs may be a single or three or more.

Further, the shape of the leaf spring portion is not limited to that described above, and may have a straight line shape and may also have a plurality of curved portions.

Further, in the embodiment described above, the turn signal switch device has been illustrated as an example of the input operation device according to the present invention. However, the present invention is also applicable to other input operation devices each having: an operating lever; a holder which supports a base portion of the operating lever so as to be rotatable on one plane; a housing which supports the holder so as to be rotatable on the other plane intersecting the one plane; and a cancel lever which is provided in the housing so as to be movable according to the rotation of the holder and can perform an advance and retreat movement with respect to a rotation locus of a cancel projection provided at a steering shaft, and a rotation.

The present invention can be applied to an input operation device provided with an operating lever.

It should be understood by those skilled in the art that various modifications, combinations, sub-combinations and alterations may occur depending on design requirements and other factors insofar as they are within the scope of the appended claims.

## Claims

1. An input operation device comprising:
an operating lever (1);
a holder (3) which supports a base portion (20) of the operating lever (1) so as to be rotatable on one plane (P2); a housing (2) and
a cancel lever (4) to return the operating lever (1) to a neutral position, which is provided in the housing (2) so as to be movable according to the rotation of the holder (3) and can perform an advance and retreat movement with respect to a rotation locus of a cancel projection (6a) which rotates along with a steering shaft of an automobile, and a rotation,
**characterised in that**:
the housing supports the holder (3) so as to be rotatable on another plane (P1) intersecting the one plane (P2); a leaf spring portion is integrally molded in the cancel lever (4), and
the leaf spring portion is elastically biased so as to be pressed against a guide surface (39) which guides the advance and retreat movement and the rotation of the cancel lever (4).

2. The input operation device according to Claim 1, wherein the guide surface (39) has a cam face which guides the leaf spring portion to a predetermined position.

3. The input operation device according to Claim 2, wherein the leaf spring portion has a protrusion portion facing the guide surface (39), and
a recessed portion which is configured of the cam face with which the protrusion portion comes into contact by elastic biasing so as to be pressed in the entire movement range of the cancel lever (4) is formed in the guide surface (39).

4. The input operation device according to Claim 3, wherein the recessed portion has a cam face which is provided to extend in a direction of the advance and retreat movement of the cancel lever (4) and inclined in a direction suppressing a rotational movement of the protrusion portion at the time of the rotation of the cancel lever (4).

5. The input operation device according to any one of Claims 1 to 4, wherein the leaf spring portion has a curved portion which is curved in a plane direction along the guide surface (39) .

6. The input operation device according to any one of Claims 1 to 5, wherein the operating lever (1) is rotatable from a neutral position to at least a left turn instruction rotational position and a right turn instruction rotational position, and
the cancel lever (4) has a protrusion portion (50) which protrudes toward the rotation locus and advances to and retreats from the rotation locus, and two arm portions (51, 52) which protrude in a direction opposite to a protruding direction of the protrusion portion (50) and rotate at the time of a retreat movement from the rotation locus of the cancel projection (6a), thereby coming into contact with the holder (3) and rotating the holder (3) so as to automatically return the operating lever (1) from the left turn instruction rotational position or the right turn instruction rotational position to the neutral position.

7. The input operation device according to Claim 6, wherein the leaf spring portion is formed at each of the two arm portions (51, 52).

8. The input operation device according to Claim 6, wherein the leaf spring portion is formed at each of the two arm portions (51, 52), and
the protrusion portion is formed on the tip side of the leaf spring portion.

9. The input operation device according to Claim 6, wherein each of the arm portions (51, 52) has
an arm portion main body formed so as to surround the leaf spring portion, and
the leaf spring portion provided so as to be movable in a direction bringing the protrusion portion close to the guide surface (39) by being bent with the base side of the arm portion as a supporting point, inside of the arm portion main body.

10. The input operation device according to any one of Claims 1 to 9, wherein a cam member (5) is provided in the housing (2) so as to face the base portion (20) of the operating lever (1),
a first driver (10) is mounted on the base portion (20) of the operating lever (1) with a first elastic member (11) interposed therebetween, so as to be brought into elastic contact with the cam member (5),
the cam member (5) has a central portion (60a) which locks the first driver (10) when the operating lever (1) is located at the neutral position, a projection for latching (61) which locks the first driver (10) when the operating lever (1) is located at either position of at least the left turn instruction position and the right turn instruction position, and an inclined surface (60b) formed so as to elastically bias the first driver (10) toward the central portion (60a) at a position except for a position where the central portion (60a) and the projection for latching (61) are formed,
the cancel lever (4) is provided in the housing (2) with an elastic member for cancel (14), which is in a compressed state, interposed therebetween, and is provided with an engagement projection (53) in which a surface having a first apex portion (53a) on the rotation locus side is formed,
the holder (3) is provided with an engagement portion (42) in which a surface having a second apex portion (42a) which comes into contact with the engagement projection (53) when the operating lever (1) is located at the neutral position is formed, and
when the operating lever (1) is located at the neutral position, the engagement projection (53) and the engagement portion (42) come into contact with each other at the first apex portion (53a) and the second apex portion (42a) and the cancel lever (4) is withdrawn out of the rotation locus.

## Patentansprüche

1. Eingabe-Betätigungsvorrichtung, aufweisend:
einen Betätigungshebel (1);
einen Halter (3), der einen Basisbereich (20) des Betätigungshebels (1) derart abstützt, dass dieser in einer Ebene (P2) drehbar ist;
ein Gehäuse (2), und
einen Rückstellhebel (4) zum Zurückstellen des Betätigungshebels (1) in eine neutrale Stellung, wobei der Rückstellhebel (4) in dem Gehäuse (2) derart vorgesehen ist, dass er entsprechend der Drehung des Halters (3) bewegbar ist und eine Vorbewegung und eine Rückzugsbewegung in Bezug auf eine Drehortskurve eines Rückstellvorsprungs (6a) ausführen kann, der sich zusammen mit einer Lenkwelle eines Kraftfahrzeugs dreht, sowie eine Drehung ausführen kann,
**dadurch gekennzeichnet, dass** das Gehäuse den Halter (3) derart abstützt, dass dieser in einer anderen Ebene (P1) drehbar ist, die die eine Ebene (P2) schneidet; und
dass ein Blattfederbereich in integraler Weise in den Rückstellhebel (4) eingeformt ist, und
dass der Blattfederbereich elastisch derart vorgespannt ist, dass er gegen eine Führungsfläche (39) gedrückt ist, die die Vorbewegung und die Rückzugsbewegung sowie die Drehung des Rückstellhebels (4) führt.

2. Eingabe-Betätigungsvorrichtung nach Anspruch 1,
wobei die Führungsfläche (39) eine Steuerfläche aufweist, die den Blattfederbereich zu einer vorbestimmten Position führt.

3. Eingabe-Betätigungsvorrichtung nach Anspruch 2,
wobei der Blattfederbereich einen der Führungsfläche (39) zugewandten Vorsprungbereich aufweist, und
wobei in der Führungsfläche (39) ein Vertiefungsbereich ausgebildet ist, der aus der Steuerfläche gebildet ist, mit der der Vorsprungbereich durch elastische Vorspannung in Kontakt gelangt, so dass er über den gesamten Bewegungsbereich des Rückstellhebels (4) mit Druck beaufschlagt wird.

4. Eingabe-Betätigungsvorrichtung nach Anspruch 3,
wobei der Vertiefungsbereich eine Steuerfläche aufweist, die derart vorgesehen ist, dass sie sich in einer Richtung der Vorbewegung und der Rückzugsbewegung des Rückstellhebels (4) erstreckt und in einer Richtung geneigt ist, die eine Drehbewegung des Vorsprungbereichs zum Zeitpunkt der Drehung des Rückstellhebels (4) unterdrückt.

5. Eingabe-Betätigungsvorrichtung nach einem der Ansprüche 1 bis 4, wobei der Blattfederbereich einen gekrümmten Bereich aufweist, der in einer Ebenenrichtung entlang der Führungsfläche (39) gekrümmt ist.

6. Eingabe-Betätigungsvorrichtung nach einem der Ansprüche 1 bis 5,
wobei der Betätigungshebel (1) von einer neutralen Stellung in mindestens eine Linksabbiege-Befehlsdrehstellung und eine Rechtsabbiege-Befehlsdrehstellung drehbar ist, und
wobei der Rückstellhebel (4) einen Vorsprungbereich (50) aufweist, der zu der Drehortskurve vorsteht und sich zu der Drehortskurve vor bewegt und von dieser zurück bewegt, sowie zwei Armbereiche (51, 52) aufweist, die in einer Richtung entgegengesetzt zu einer Vorsprungrichtung des Vorsprungbereichs (50) vorstehen und sich zum Zeitpunkt einer Rückzugsbewegung von der Drehortskurve des Rückstellvorsprungs (6a) drehen und dadurch mit dem Halter (3) in Kontakt kommen und den Halter (3) drehen, um den Betätigungshebel (1) automatisch von der Linksabbiege-Befehlsdrehstellung oder der Rechtsabbiege-Befehlsdrehstellung zu der neutralen Stellung zurückzustellen.

7. Eingabe-Betätigungsvorrichtung nach Anspruch 6,
wobei der Blattfederbereich an jedem der beiden Armbereiche (51, 52) gebildet ist.

8. Eingabe-Betätigungsvorrichtung nach Anspruch 6,
wobei der Blattfederbereich an jedem der beiden Armbereiche (51, 52) gebildet ist, und
wobei der Vorsprungbereich an der Spitzenseite des Blattfederbereichs gebildet ist.

9. Eingabe-Betätigungsvorrichtung nach Anspruch 6,
wobei jeder der Armbereiche (51, 52) einen Armbereich-Hauptkörper aufweist, der den Blattfederbereich umgebend ausgebildet ist, und wobei der Blattfederbereich derart vorgesehen ist, dass er in einer Richtung bewegbar ist, in der der Vorsprungbereich nahe zu der Führungsfläche (39) hin gebracht wird, indem er mit der Basisseite des Armbereichs als Abstützpunkt innerhalb des Armbereich-Hauptkörpers gebogen wird.

10. Eingabe-Betätigungsvorrichtung nach einem der Ansprüche 1 bis 9,
wobei ein Steuerflächenelement (5) in dem Gehäuse (2) derart vorgesehen ist, dass es dem Basisbereich (20) des Betätigungshebels (1) zugewandt ist,
wobei ein erster Treiber (10) unter Zwischenanordnung eines ersten elastischen Elements (11) an dem Basisbereich (20) des Betätigungshebels (1) angebracht ist, um mit dem Steuerflächenelement (5) in elastischen Kontakt gebracht zu werden,
wobei das Steuerflächenelement (5) einen zentralen Bereich (60a) aufweist, der den ersten Treiber (10) arretiert, wenn sich der Betätigungshebel (1) in der neutralen Stellung befindet, einen Vorsprung zur Verrastung (61) aufweist, der den ersten Treiber (10) arretiert, wenn sich der Betätigungshebel (1) in einer Position von mindestens der Linksabbiege-Befehlsstellung und der Rechtsabbiege-Befehlsstellung befindet, sowie eine geneigte Fläche (60b) aufweist, die an einer Position mit Ausnahme einer Position, an der der zentrale Bereich (60a) und der Vorsprung zur Verrastung (60) gebildet sind, derart ausgebildet ist, dass sie den ersten Treiber (10) elastisch zu dem zentralen Bereich (60a) hin vorspannt,
wobei der Rückstellhebel (4) in dem Gehäuse (2) mit einem elastischen Element zur Rückstellung (14) versehen ist, das in einem zusammengedrückten Zustand dazwischen angeordnet ist, sowie mit einem Eingriffsvorsprung (53) versehen ist, an dem eine einen ersten Scheitelbereich (53a) aufweisende Oberfläche auf der Seite der Drehortskurve gebildet ist,
wobei der Halter (3) mit einem Eingriffsbereich (42) versehen ist, in dem eine einen zweiten Scheitelbereich (42a) aufweisende Oberfläche gebildet ist, die mit dem Eingriffsvorsprung (53) in Kontakt gelangt, wenn sich der Betätigungshebel (1) in der neutralen Stellung befindet, und
wobei dann, wenn sich der Betätigungshebel (1) in der neutralen Stellung befindet, der Eingriffsvorsprung (53) und der Eingriffsbereich (42) an dem ersten Scheitelbereich (53a) und dem zweiten Scheitelbereich (42a) miteinander in Kontakt gelangen und der Rückstellhebel (4) von der Drehortskurve weggezogen wird.

## Revendications

1. Dispositif d'opération d'entrée comprenant :
un levier de commande (1) ;
un support (3) qui supporte une portion de base (20) du levier de commande (1) de façon à pouvoir effectuer des rotations sur un plan (P2) ;
un boîtier (2) ; et
un levier d'annulation (4) destiné à renvoyer le levier de commande (1) à une position neutre, qui est prévu dans le boîtier (2) de manière pouvoir se déplacer en fonction de la rotation du support (3) et qui peut exécuter un mouvement d'avance et de recul par rapport à un lieu de rotation d'une protubérance d'annulation (6a) qui effectue des rotations de manière conjointe avec une colonne de direction d'un véhicule automobile, ainsi qu'une rotation,
**caractérisé en ce que** :
le boîtier supporte le support (3) de façon à pouvoir effectuer des rotations sur un autre plan (P1) qui coupe le premier plan (P2) ;
une portion faisant office de ressort à lame est moulée en une seule pièce dans le levier d'annulation (4) ; et
la portion faisant office de ressort à lame est mise en état de précontrainte de manière élastique d'une manière telle qu'elle est comprimée contre une surface de guidage (39) qui guide le mouvement d'avance et de recul ainsi que la rotation du levier d'annulation (4).

2. Dispositif d'opération d'entrée selon la revendication 1, dans lequel la surface de guidage (39) possède une face de came qui guide la portion faisant office de ressort à lame jusqu'à une position prédéterminée.

3. Dispositif d'opération d'entrée selon la revendication 2, dans lequel la portion faisant office de ressort à lame possède une portion sous la forme d'une protrusion opposée à la surface de guidage (39) ; et
une portion évidée, qui possède la configuration de la face de came avec laquelle la portion sous la forme d'une protrusion entre en contact par mise en état de précontrainte élastique de façon à être comprimée sur toute la plage de mouvement du levier d'élimination (4), est formée dans la surface de guidage (39).

4. Dispositif d'opération d'entrée selon la revendication 3, dans lequel la portion évidée possède une face de came qui est conçue pour s'étendre dans une direction du mouvement d'avance et de recul du levier d'annulation (4) et inclinée dans une direction qui supprime un mouvement de rotation de la portion sous la forme d'une protrusion au moment de la rotation du levier d'élimination (4).

5. Dispositif d'opération d'entrée selon l'une quelconque des revendications 1 à 4, dans lequel la portion faisant office de ressort à lame possède une portion courbe qui est courbée dans une direction plane le long de la surface de guidage (39).

6. Dispositif d'opération d'entrée selon l'une quelconque des revendications 1 à 5, dans lequel le levier de commande (1) est à même d'effectuer des rotations à partir d'une position neutre jusqu'à au moins une position rotative d'instruction de virage à gauche et une position rotative d'instruction de virage à droite ; et
le levier d'annulation (4) possède une portion sous la forme d'une protrusion (50) qui fait saillie en direction du lieu de rotation et avance en direction du lieu de rotation et recule par rapport à ce dernier, et deux portions en forme de bras (51, 52) qui font saillie dans une direction opposée à une direction saillante de la portion sous la forme d'une protrusion (50) et effectue des rotations au moment d'un mouvement de recul par rapport au lieu de rotation de la protubérance d'annulation (6a), pour ainsi entrer en contact avec le support (3) et mettre le support (3) en rotation de façon à renvoyer de manière automatique le levier de commande (1) à partir de la position rotative d'instruction de virage à gauche ou de la position rotative d'instruction de virage à droite jusqu'à la position neutre.

7. Dispositif d'opération d'entrée selon la revendication 6, dans lequel la portion faisant office de ressort à lame est réalisée à chacune des deux portions en forme de bras (51, 52).

8. Dispositif d'opération d'entrée selon la revendication 6, dans lequel la portion faisant office de ressort à lame est réalisée à chacune des deux portions en forme de bras (51, 52) ; et
la portion sous la forme d'une protrusion est réalisée sur le côté extrémité de la portion faisant office de ressort à lame.

9. Dispositif d'opération d'entrée selon la revendication 6, dans lequel chacune des portions en forme de bras (51, 52) possède un corps principal de portion en forme de bras, conçu de façon à entourer la portion faisant office de ressort à lame ; et
la portion faisant office de ressort à lame est conçue de manière à pouvoir se déplacer dans une direction qui amène la portion sous la forme d'une protrusion à proximité de la surface de guidage (39) par pliage en prenant comme point de support le côté de base de la portion en forme de bras, à l'intérieur du corps principal de la portion en forme de bras.

10. Dispositif d'opération d'entrée selon l'une quelconque des revendications 1 à 9, dans lequel un élément faisant office de came (5) est prévu dans le boîtier (2) en étant opposé à la portion de base (20) du levier de commande (1) ;
un premier dispositif d'entraînement (10) est monté sur la portion de base (20) du levier de commande (1), un premier élément élastique (11) étant intercalé entre les deux, pour pouvoir être amené en contact élastique avec l'élément faisant office de came (5) ;
l'élément faisant office de came (5) possède une portion centrale (60a) qui verrouille le premier dispositif d'entraînement (10) lorsque le levier de commande (1) est placé dans la position neutre, une protubérance de verrouillage (61) qui verrouille le premier dispositif d'entraînement (10) lorsque le levier de commande (1) est placé dans l'une ou l'autre position choisie parmi au moins la position d'instruction de virage à gauche et la position d'instruction de virage à droite, et une surface inclinée (60b) conçue de façon à mettre en état de précontrainte de manière élastique le premier dispositif d'entraînement (10) en direction de la portion centrale (60a) dans une position, à l'exception d'une position dans laquelle la portion centrale (60a) et la protubérance de verrouillage (61) sont réalisées ;
le levier d'annulation (4) est logé dans le boîtier (2), un élément élastique (14) pour l'annulation, qui est placé dans un état comprimé, étant intercalé entre les deux, et est muni d'une protubérance de mise en contact (53) dans laquelle une surface possédant une première portion sous la forme d'un sommet (53a) est formée du côté où se trouve le lieu de rotation ;
le support (3) est muni d'une portion de mise en contact (42) dans laquelle est formée une surface possédant une seconde portion sous la forme d'un sommet (42a) qui entre en contact avec la protubérance de mise en contact (53) lorsque le levier de commande (1) est placé dans la position neutre ; et lorsque le levier de commande (1) est placé dans la position neutre, la protubérance de mise en contact (53) et la portion de mise en contact (42) entrent en contact l'une avec l'autre à la première portion sous la forme d'un sommet (53a) et à la seconde portion sous la forme d'un sommet (42a), et le levier d'annulation (4) quitte le lieu de rotation.
